Europäisches Patentamt

**European Patent Office**

Office européen des brevets

(19)

(11) Veröffentlichungsnummer: **0 043 593**
**B1**

(12) **EUROPÄISCHE PATENTSCHRIFT**

(45) Veröffentlichungstag der Patentschrift:
**27.03.85**

(51) Int. Cl.⁴: **F 16 L 23/04**

(21) Anmeldenummer: **81105330.5**

(22) Anmeldetag: **09.07.81**

(54) **Einrichtung zum Verbinden zweier Flansche.**

(30) Priorität: **09.07.80 DE 3026060**
**26.03.81 DE 3111997**

(43) Veröffentlichungstag der Anmeldung:
**13.01.82 Patentblatt 82/2**

(45) Bekanntmachung des Hinweises auf die Patenterteilung:
**27.03.85 Patentblatt 85/13**

(84) Benannte Vertragsstaaten:
**CH DE FR GB IT LI**

(56) Entgegenhaltungen:
**DE - A - 2 404 890**
**DE - A - 2 918 998**
**DE - C - 76 008**
**DE - C - 937 264**
**FR - A - 2 427 539**
**FR - A - 2 445 923**
**GB - A - 886 036**
**US - A - 2 640 717**
**US - A - 3 019 036**
**US - A - 3 307 862**
**US - A - 3 661 409**

(73) Patentinhaber: **Max-Planck-Gesellschaft zur Förderung der Wissenschaften e.V., Bunsenstrasse 10, D-3400 Göttingen (DE)**

(72) Erfinder: **Andelfinger, Claus, Dr., Kampenwandstrasse 11, D-8210 Prien/Chiemsee (DE)**
Erfinder: **Ulrich, Manfred, Dipl.-Ing., Otto-Hahn-Strasse 2, D-8046 Garching (DE)**
Erfinder: **Weber, German, Torquato-Tasso-Strasse 49, D-8000 München 40 (DE)**
Erfinder: **Zacharias, Arno, Türkenstrasse 16, D-8046 Garching (DE)**

(74) Vertreter: **von Bezold, Dieter, Dr. et al, Patentanwälte Dr. D. von Bezold, Dipl.-Ing. P. Schütz, Dipl.-Ing. W. Heusler Maria-Theresia-Strasse 22 Postfach 86 02 60, D-8000 München 86 (DE)**

**Beschreibung**

Einrichtung zum Verbinden zweier Flansche durch axiales Zusammenpressen, mit einem ringförmigen, die Flansche radial außen umgebenden schubsteifen Spannband, einer zum Zusammenziehen bzw. Auseinanderdrücken der Enden des Spannbandes mit diesen verbundenen Spannvorrichtung, mehreren Klemmgliedern, welche mit Abstand zueinander längs des Spannbandes an diesen angebracht sind und jeweils eine nach innen weisende Einbuchtung aufweisen, durch deren abgeschrägte Seitenwände die Flansche beim Zusammenziehen der Spannbandes axial zusammengedrückt werden, und einer mit den Klemmgliedern in Wirkverbindung stehenden Führung, welche die Klemmglieder radial führt sowie gegenüber der Mittelachse der Flansche zentriert und welche an einer Stelle die aus Spannbande und Klemmgliedern gebildete Einheit in Umfangsrichtung fixiert.

Eine Einrichtung dieser Art ist aus der US-A-3 019 036 bekannt. Ein federndes Metallband ist bei dieser bekannten Flanschverbindungseinrichtung zu einem annähernd geschlossenen Kreis gebogen, die beiden Enden des Metallbandes sind mit einer Spannvorrichtung verbunden. An der Innenfläche des Metallbandes mit Abstand voneinander angeordnet und mit dem Metallverbund verbunden sind Klemmglieder, die beim Spannen des Metallbandes auf die Flansche aufgepreßt werden. Über den Umfang des Metallbandes angeordnete und mit diesem fest verbundene Klammern sind verschiebbar mit Führungsbügel verbunden, die wiederum fest mit einem der beiden Flansche verbunden sind. Durch die Führung entlang der Führungsbügel soll eine bestimmte radiale und axiale Bewegung der Klemmglieder bezüglich der Flansche erreicht werden.

Aus der US-A-2 640 717, Fig. 8—12, ist eine Klemmvorrichtung bekannt, die durch eine sogenannte Spannrollenkette gebildet wird. Durch spezielle verlängerte Verbindungslaschen erhält die Spannrollenkette eine gewisse Schubsteifigkeit.

Aus der GB-A-886 036 ist eine Einrichtung zum Verbinden zweier Flansche bekannt, deren Klemmvorrichtung aus einer die Flansche umgebenden Federanordnung, z. B. einer Blattfeder, besteht, an der eine Anzahl von Klemmblöcken angebracht sind. Die Klemmblöcke sind längs der Federanordnung verschiebbar und an ihr durch Reibungsschluß gehalten. Eine ähnliche Einrichtung, bei der die Klemmblöcke jedoch durch Schrauben an eine Blattfeder fixiert sind, ist aus DE-C-937 264 bekannt.

Aus der US-A-3 661 409 ist eine Klemmvorrichtung bekannt, bei der die Klemmglieder in Form einer Kette angeordnet sind, deren Enden mit einer Spannvorrichtung verbunden sind. Die einzelnen Kettenglieder werden auf speziellen Kurven in entsprechend geformten Führungsschlitzen eines Führungskastens geführt.

Bei den bekannten Einrichtungen ist nicht sichergestellt, daß die Flansche beim Lösen der Spannvorrichtung von der Klemmvorrichtung völlig freigegeben werden. Beim Öffnen und Schließen treten außerdem große Reibungskräfte auf und es besteht die Gefahr, daß die Klemmvorrichtung in der Führungsvorrichtung verkantet und verklemmt. Schließlich eignen sich die bekannten Vorrichtungen nicht für eine zuverlässige Fernbedienung.

Die Erfindung vermeidet diese Nachteile dadurch, daß bei einer Einrichtung der eingangs angegebenen Art die Führung ein ringförmiger, radial nach innen offener Kasten ist, der die aus Spannband und Klemmgliedern gebildete Einheit außen umgreift, das an einem Ende des Spannbandes angeordnete Klemmglied mittels einer radialen Führung des Kastens gegen Verschiebung in Umfangsrichtung gesichert ist, und eines der Klemmglieder mit dem Spannband starr verbunden ist, während die übrigen Klemmglieder bezüglich des Spannbandes in Umfangsrichtung verschiebbar sind.

Die Einrichtung gemäß der Erfindung ermöglicht ein einwandfreies Spreizen und Öffnen der Klemmvorrichtung, so daß die Flansche sicher freigegeben werden. Die Klemmvorrichtung kann in keiner Montageposition nach innen einknicken und das Auseinanderfahren oder Zusammenfahren der Flansche verhindern. Dadurch, daß das eine Ende der Klemmvorrichtung in Umfangsrichtung fixiert ist, eignet sich die Einrichtung gemäß der Erfindung besonders gut für eine Fernbedienung, z. B. durch Manipulatoren oder Servomotoren.

Im folgenden werden Ausführungsbeispiele der Erfindung unter Bezugnahme auf die Zeichnungen näher erläutert. Es zeigt

Fig. 1 eine axiale Draufsicht auf eine bevorzugte Ausführungsform der Einrichtung gemäß der Erfindung, wobei eine dem Betrachter zugewandte Seitenwand eines Kettenkastens weggeschnitten und Teile des Inneren der Vorrichtung weggebrochen sind;

Fig. 2 einen Radialschnitt der Einrichtung gemäß Fig. 1 mit zwei Flanschen im geschlossenen Zustand der Einrichtung;

Fig. 3 eine axiale Draufsicht auf einen Teil des Kettenkastens der Einrichtung gemäß Fig. 1 und 2;

Fig. 4 ein Radialschnitt in einer Ebene IV-IV der Fig. 3;

Fig. 5 eine Fig. 2 entsprechende Darstellung mit einer anderen vorteilhaften Zentriervorrichtung;

Fig. 6 eine axiale, teilweise geschnittene Ansicht einer Einrichtung gemäß einer zweiten Ausführungsform der Erfindung;

Fig. 7 eine Seitenansicht der Einrichtung gemäß Fig. 6 im Axialschnitt.

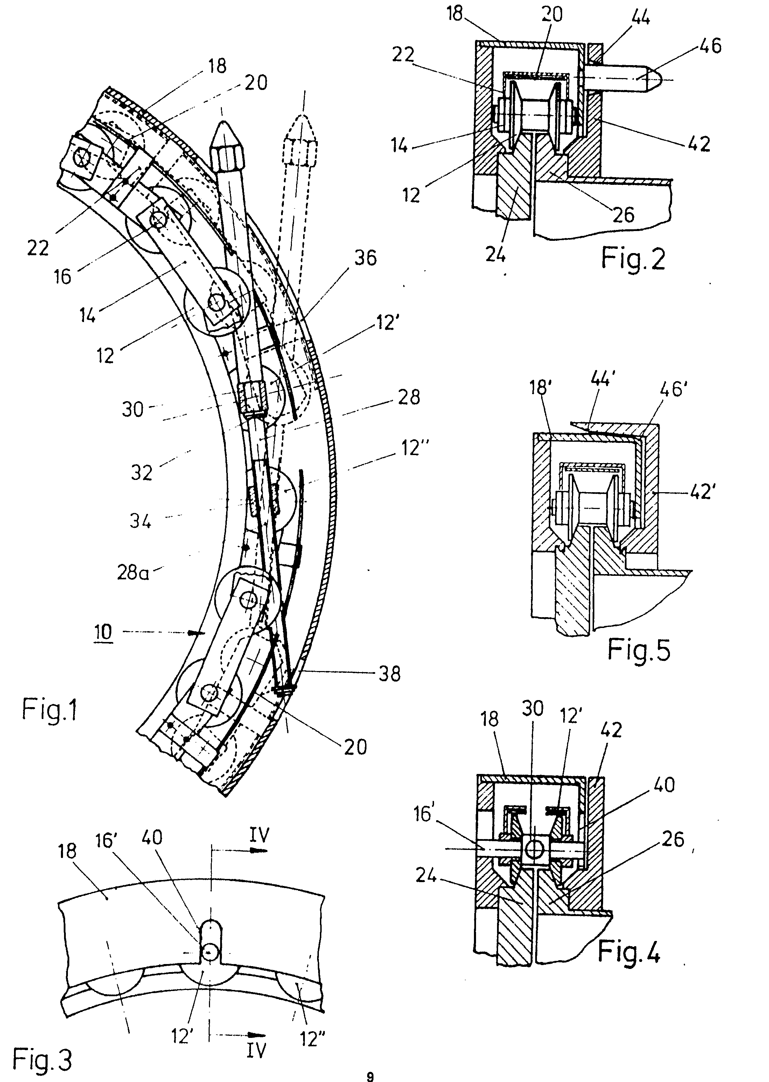

Die in den Fig. 1 bis 4 dargestellte Flanschverbindungseinrichtung enthält eine Klemmvorrichtung mit einer Spannrollenkette 10, die eine Reihe von Spannrollen 12 und Kettenglieder in Form von Laschen 14 enthält. Die Spannrollen 12 haben eine garnspulenartige Form (siehe Fig. 2) und sind mit Lagerbolzen 16 versehen, die auf beiden Seiten über die Laschen 14 gelenkig miteinander verbunden sind.

Die Spannrollenkette 10 ist in einer ringförmigen Führung in Form eines Kettenkastens 18 untergebracht, der einen im wesentlichen U förmigen Querschnitt hat und nach innen offen ist (Fig. 2). Auf der radial äußeren Seite der Spannrollenkette 10 ist ein Spannband in Form einer Blattfeder 20 angeordnet. Die Blattfeder 20 ist mit den Laschen 14 der Kettenglieder über U förmige Bügel 22 so gekoppelt, daß einerseits ein Einknicken der Spannrollenkette beim Auseinanderspreizen ihrer Enden verhindert wird, die Spannrollenkette andererseits um den Umfang zweier zu verbindender Flansche 24, 26, deren einander abgewandte Flanken konisch ausgebildet sind (Fig. 2).

Das Zusammenspannen und Öffnen der Spannrollenkette erfolgt mittels einer Spannvorrichtung, die eine Spannschraube 28 enthält, welche einerseits in einem Lagerblock 30, der durch den mittleren Teil einer Spannrolle 12' am einen Ende der Spannrollenkette 10 gebildet wird, drehbar gelagert und durch einen Sprengring 32 axial gesichert ist. Andererseits ist die Spannschraube 28 mit einem Gewindeteil 28a in einen Gewindeblock 34 eingeschraubt, der durch den mittleren Teil einer Spannrolle 12'' am anderen Ende der Spannrollenkette gebildet wird. Durch Drehen der Spannschraube 28 können also die Enden der Spannrollenkette zusammengespannt oder auseinandergespreizt werden, wobei sich der Durchmesser der Spannrollenkette verkleinert bzw. vergrößert. Die zusammengespannte Stellung, in der die Spannrollenkette ihren kleineren Durchmesser hat, ist in Fig. 1 mit ausgezogenen Linien und in Fig. 2 dargestellt; die auseinandergespreizte, geöffnete Stellung der Spannrollenkette ist in Fig. 1 gestrichelt dargestellt.

Die Spannschraube 28 erstreckt sich durch zwei Löcher 36 und 38 in der Umfangswand des Kettenkastens 18 nach außen. Die Löcher sind so bemessen, daß die Spannschraube 28 entsprechend der Änderung des Durchmessers der Spannrollenkette beim Öffnen bzw. Schließen schwenken kann.

Damit die Durchmesseränderungen der Spannrollenkette 10 beim Öffnen bzw. Schließen der Flanschverbindungsvorrichtung durch die Blattfeder 20 nicht behindert wird, ist letztere lose in die an den Laschen 14 angenieteten Bügel 22 eingelegt, mit Ausnahme von einem Bündel 22, an dem die Blattfeder befestigt ist, um ihre mittlere Lage bezüglich der Spannrollenkette zu fixieren. Vorzugsweise erfolgt die Befestigung an einem in Fig. 1 nicht sichtbaren Bügel, der den freien Enden der Blattfeder diametral gegenüberliegt. Die Blattfeder 20 strebt also dazu, den Durchmesser der Spannrollenkette möglichst groß zu halten. Die Blattfeder 20 ist in der Nähe ihrer in Fig. 1 sichtbaren Enden mit Längsschlitzen versehen, durch die sich die Spannschraube 28 erstreckt. Zur Fixierung der Lage der Spannschraube 28 bezüglich des Kettenkastens 18 ist der Lagerbolzen 16' (Fig. 3 und 4) der den Lagerblock 30 bildenden Spannrolle 12' beidseits verlängert und in radialen Schlitzen 40 der Seitenwände des Kettenkastens 18 geführt, wie in Fig. 3 und 4 dargestellt ist.

Der eine Flansch 24 kann mit dem Kettenkasten 18 verbunden sein, wie es in Fig. 2 dargestellt ist. Der andere, bewegliche Flansch 26 ist vorteilhafterweise mit einer Zentrierscheibe 42 verbunden, welche eine Reihe von axialen Löchern 44 aufweist, welche mit Führungsbolzen 46 zusammenwirken, die an der dem stationären Flansch 24 abgewandten Seitenwand des Kettenkastens 18 angebracht sind. Die Zentrierscheibe gewährleistet zusammen mit den spitz zulaufenden Führungsbolzen 46 eine einwandfreie Zentrierung der zu verbindenden Flansche 24 und 26.

Fig. 5 zeigt eine andere, vorteilhafte Zentriervorrichtung für den beweglichen Flansch. Die Zentrierung erfolgt hier durch eine zur Flanschachse schräge, konische Fläche 46', die z. B. durch Andrehen des Kettenkastens 18' gebildet ist, und durch eine konische Ausdrehung 44' einer mit dem beweglichen Flansch verbundenen Zentrierscheibe 42'. Die Zentrierscheibe 42' bildet also eine ringförmige, sich zur offenen Seite hin etwas erweiternde Vertiefung, die komplementär zu der ihr zugewandten, die schräge Fläche 46' enthaltenden Seite des Kettenkastens geformt ist. Sowohl die Fläche 46' als auch die Fläche 44' können, wie dargestellt, aus zwei Bereichen unterschiedlichen Kegelwinkels bestehen, um die Zentrierung zu erleichtern.

Wenn die Enden der Spannrollenkette 10 durch die Spannschraube 28 voneinander entfernt werden, öffnet sich die Spannrollenkette gleichmäßig und legt sich schließlich mit den Bügeln 22 längs ihrer ganzen Länge an der Außenwand des Kettenkastens 18 an. Die Lage der Spannrollenkette ist dann genau fixiert und alle Spannrollen 12 sind von den Flanschen 24 und 26 entfernt, so daß der Flansch 26 unbehindert zurückgezogen werden kann. Entsprechendes gilt für das Einfahren des Flansches 26 in die geöffnete Spannvorrichtung. Beim Zusammenziehen der Enden der Spannrollenkette durch die Spannschraube 28 werden die zweckmäßigerweise mit abgeschrägten Seitenflächen versehenen Flansche 24 und 26 fest zusammengespannt.

Die Flanschverbindungseinrichtung gemäß Fig. 1 bis 5 kann für die Flansche beliebigen Nenndurchmessers konstruiert werden, besondere Vorteile ergeben sich bei großen Nenndurchmessern, z. B. 400 mm und mehr. Sie eignet sich besonders gut für eine Betätigung durch Fernbedienungseinrichtungen wie Manipulatoren oder Servomotoren. Sie kann sowohl für druckfeste als auch für vakuumdichte Verbindungen verwendet werden.

Die Spannkette kann auch aus antimagneti-

schen Werkstoffen gefertigt werden, wie Messing und/oder unmagnetischem nichtrostendem Stahl, und vermag auch in einer solchen Ausführung eine Spannkraft zu erzeugen, die für eine Abdichtung sowohl von Hochvakuum- als auch Druckverbindungen für einen mittleren Druckbereich von z. B. bis 10 bar geeignet ist.

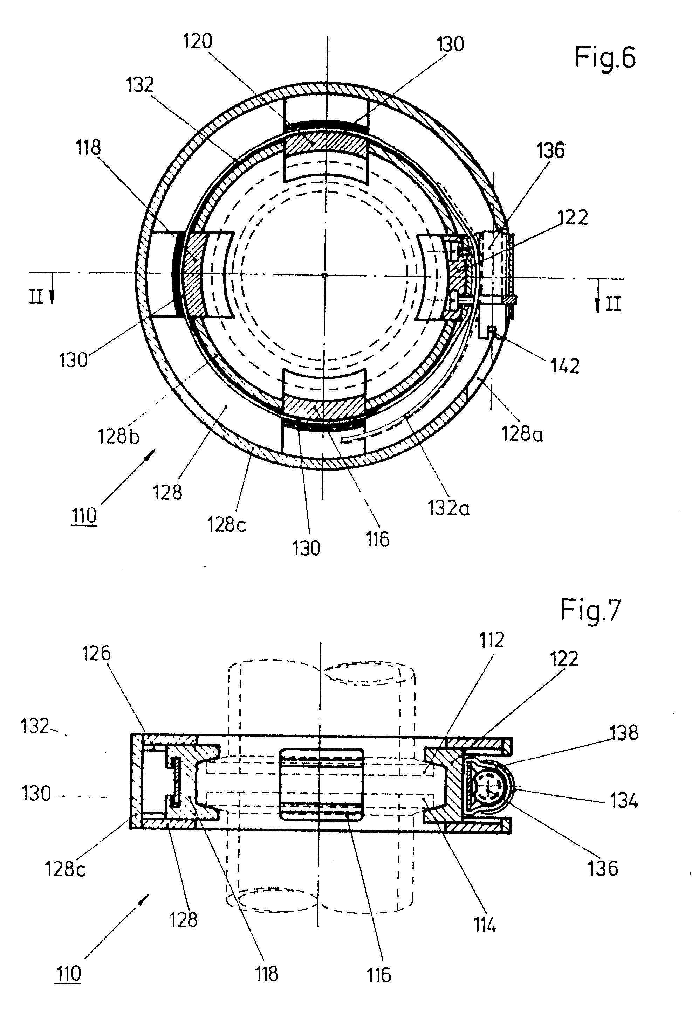

Die in Fig. 6 und 7 dargestellte Flanschverbindungseinrichtung 110 dient zum Verbinden zweier Rohrflansche 112, 114, deren einander abgewandte Flanken konisch ausgebildet sind, wie in Fig. 7 gestrichelt dargestellt ist. Diese Ausführungsform ist besonders einfach und preiswert in der Herstellung. Sie eignet sich besonders für Flanschverbindungen mit Nennweiten unter 100 mm.

Die Flanschverbindungseinrichtung gemäß Fig. 6 und 7 enthält vier Klemmsteine oder Spannblöcke 116, 118, 120 und 122, die an der den Flanschen zugewandten Seite jeweils eine nutartige Einbuchtung mit schrägen Seitenwänden aufweisen. Die Schräge der Seitenwände der Einbuchtung ist vorzugsweise gleich der Schräge der äußeren Flanken der Flansche 112, 114, wie aus Fig. 7 ersichtlich ist. Die Spannblöcke 116, 118, 120 und 122 sind in radialen Führungsnuten 126 (Fig. 7) geführt, die in den Seitenwänden einer ringförmigen Führung in Form eines im Querschnitt U-förmigen, nach innen hin offenen Halterungsringes 128 gebildet sind.

Die Klemmblöcke 116, 118 und 120 weisen auf ihrer den Flanschen abgewandeten Seite jeweils eine schlitzförmige Ausnehmung 130 auf, die in Umfangsrichtung der Flansche verläuft und einen in Achsrichtung der Flansche langgestreckten Querschnitt hat. Die Ausnehmungen 130 haben vorzugsweise einen etwa T-förmigen Querschnitt und sind nach außen offen, wie es in Fig. 7 dargestellt ist.

Die Ausnehmungen 130 nehmen ein Spannband 132 auf, das mit einer Spannvorrichtung 134 versehen ist. Als Spannband mit Spannvorrichtung wird vorzugsweise eine Art von Schlauchklemmbride mit Spannschnecke 136 verwendet, welche in einer Halterung 138 drehbar gelagert ist. Die Halterung und das eine Ende des Spannbandes sind am Klemmblock 122 befestigt, das andere Ende 132a des Spannbandes ist mit einer zahnstangenartigen Prägung versehen, in die die Schnecke 136 eingreift. Beim Drehen der Schnecke wird das Spannband je nach Drehrichtung zusammengezogen oder erweitert, wobei dann die Klemmblöcke gegen die Flansche 112, 114 gedrückt werden und diese axial zusammenpressen bzw. die Klemmblöcke von den Flanschen entfernt werden und diese freigeben. Die Schnecke ist in Fig. 6 schematisch mit einem Schlitz 142 für einen Schraubendreher und dgl. dargestellt, sie kann in der Praxis mit einem Kupplungsglied für eine biegsame Welle oder ein anderes Antriebselement versehen sein.

Die Außenwand 128c des Halterungsringes 128, die zur Zentrierung der Klemmblöcke 116, 118, 120, 122 im geöffneten Zustand der Spannvorrichtung dient, weist einen Ausschnitt 128a auf, durch den die Schnecke 136 zugänglich ist.

Der Halterungsring 128 ist mit seiner Außenwand 128c eine zum Öffnen der Klemmblöcke 116, 118, 120 und 122 geeignete Begrenzung, so daß diese konzentrisch zum Halterungsring 128 stehen.

Der Halterungsring 128 ist mit einer Innenwand 128b versehen, die am Ort der Klemmblöcke 116, 118, 120 und 122 Ausschnitte aufweist, durch die die Klemmblöcke hindurchgeführt werden. Die Innenwand 128b bildet dann gleichzeitig auch eine Auflage für das Spannband 132 in den zwischen den Klemmblöcken liegenden Stücken.

Selbstverständlich können im Bedarfsfall auch weniger oder mehr als vier Klemmblöcke vorgesehen sein.

Bei nicht zugänglichen, z. B. radioaktiv verseuchten Anlagen wird es im allgemeinen, wie bei den Ausführungsbeispielen gemäß Fig. 1 bis 4, zweckmäßig sein, den Halterungsring bezüglich des einen Flansches zu fixieren. Man kann dann z. B. eine Apparatur, die mit dem einen Flansch und mit der Verbindungseinrichtung versehen ist, einfach mit einem Kran oder dgl. manipulieren.

**Patentansprüche**

1. Einrichtung zum Verbinden zweier Flansche (24, 26; 112, 114) durch axiales Zusammenpressen, mit:

a) einem ringförmigen, die Flansche radial außen umgebenden schubsteifen Spannband (20; 132),

b) einer zum Zusammenziehen bzw. Auseinanderdrücken der Enden des Spannbandes (20; 132) mit diesen verbundenen Spannvorrichtung (28, 30; 136),

c) mehreren Klemmgliedern (12, 12', 12''; 116, 118, 120, 122), welche mit Abstand zueinander längs des Spannbandes an diesem angebracht sind und jeweils eine nach innen weisende Einbuchtung aufweisen, durch deren abgeschrägte Seitenwände die Flansche beim Zusammenziehen des Spannbandes axial zusammengedrückt werden,

d) einer mit den Klemmgliedern in Wirkverbindung stehenden Führung (18; 128), welche die Klemmglieder radial führt sowie gegenüber der Mittelachse der Flansche zentriert und welche an einer Stelle die aus Spannband und Klemmgliedern gebildete Einheit (10; 116, 118, 120, 122, 132) in Umfangsrichtung fixiert,

gekennzeichnet durch die Kombination folgender Merkmale:

e) die Führung (18; 128) ist ein ringförmiger, radial nach innen offener Kasten, der die aus Spannband und Klemmgliedern gebildete Einheit (10; 116, 118, 120, 122, 132) außen umgreift;

f) das an einem Ende des Spannbandes (20; 132) angeordnete Klemmglied (12'; 122) ist mittels einer radialen Führung (40; 126) des Kastens (18; 128) gegen Verschiebung in Umfangsrichtung gesichert;

g) eines der Klemmglieder (12; 122) ist mit dem Spannband (20; 132) starr verbunden, während die übrigen Klemmglieder (12, 12', 12''; 116, 118, 120) bezüglich des Spannbandes in Umfangsrichtung verschiebbar sind.

2. Einrichtung nach Anspruch 1, dadurch gekennzeichnet, daß das Spannband aus einer ringförmigen Blattfeder (20) besteht.

3. Einrichtung nach Anspruch 1 oder 2, dadurch gekennzeichnet, daß die Klemmglieder als Spannrollen (12, 12', 12'') ausgebildet und miteinander durch Laschen (14) zu einer Spannrollenkette (10) verbunden sind, daß das Spannband (20) durch U-förmige Bügel (22) geht, welche mit den Laschen (14) der Spannrollenkette (10) verbunden sind, und daß das Spannband mit einem Bügel (22) starr verbunden und in den anderen Bügeln gleitend geführt ist.

4. Einrichtung nach Anspruch 3, bei der die Spannvorrichtung eine Spannschraube (28) und einen diese aufnehmenden schraubenmutterartigen Gewindeblock (34) enthält, dadurch gekennzeichnet, daß die Spannschraube (28) in einem der einen Endrolle (12') zugeordneten Lagerbock (30) drehbar und axial fixiert gelagert ist, daß der Gewindeteil (28a) der Spannschraube in den der anderen Endrolle (12'') zugeordneten Gewindeblock (34) eingreift, und daß der Lagerbock (30) in radialen, nutartigen Schlitzen (40) der Seitenwände des ringförmigen Kastens (18) radial verschiebbar geführt ist.

5. Einrichtung nach Anspruch 1 oder 2, dadurch gekennzeichnet, daß die Klemmglieder als Klemmblöcke (116, 118, 120, 122) ausgebildet sind, die in Führungsnuten (126) des ringförmigen Kastens (128) radial verschiebbar geführt sind.

6. Einrichtung nach Anspruch 5, dadurch gekennzeichnet, daß der ringförmige Kasten (128) eine ringförmige Innenwand (128b) mit Durchbrechungen für die Klemmblöcke (116, 118, 120, 122) aufweist.

7. Einrichtung nach einem der vorhergehenden Ansprüche, bei der der ringförmige Kasten (18, 18') an einem der beiden Flansche (24) fixiert ist, dadurch gekennzeichnet, daß der ringförmige Kasten einen Teil (46) einer Zentriervorrichtung trägt oder als Teil (18') einer Zentriervorrichtung ausgebildet ist, welcher Teil mit einem zweiten, am anderen Flansch (26) angebrachten komplementären Zentriervorrichtungsteil (42, 42') zusammenwirkt.

8. Einrichtung nach Anspruch 7, dadurch gekennzeichnet, daß die Zentriervorrichtung Führungsbolzen (46), die von dem ringförmigen Kasten (18) vorspringen, und eine mit dem anderen Flansch (26) verbundene Zentrierscheibe (42) enthält, die Löcher für die Führungsbolzen (46) aufweist (Fig. 2).

9. Einrichtung nach Anspruch 7, dadurch gekennzeichnet, daß die Zentriervorrichtung eine zum anderen Flansch hin konisch zulaufende Fläche (46') an der Außenwand des ringförmigen Kastens (18') und eine am anderen Flansch angebrachte Zentrierscheibe (42') enthält, die eine ringförmige Vertiefung (44') mit einer zur konischen Fläche (46') der ringförmigen Führung (18') komplementären Fläche aufweist (Fig. 5).

## Claims

1. Device for joining two flanges (24, 26; 112, 114) by means of axial compression having:

a) an annular shear-resistant tension band (20; 132) surrounding the flanges radially outwardly,

b) a tensioning device (28, 30; 136) connected to the latter for drawing together or forcing apart the ends of the tension band (20; 132),

c) a plurality of clamping members (12, 12', 12''; 116, 118, 120, 122) which are mounted on the tension band and spaced apart along its length and each have an inwardly directed recess, by means of the sloped side surfaces of which the flanges are axially compressed,

d) a guide (18; 128) operatively coupled with the clamping members which guides the clamping members radially and centres them with respect to the central axis of the flanges and which at one point fixes the unit (10; 116, 118, 120, 122, 132) comprising the tension band and clamping members in the peripheral direction,

characterised by the combination of the following features:

e) the guide (18; 128) is an annular, radially inwardly open enclosure which externally embraces the unit (10; 116, 118, 120, 122, 132) comprising the tension band and clamping members;

f) the clamping member (12'; 122) arranged at one end of the tension band (20; 132) is secured against displacement in the peripheral direction by means of a radial guide (40; 126) on the enclosure (18; 128);

g) one of the clamping members (12; 122) is rigidly connected to the tension band (20; 132) whilst the remaining clamping members (12, 12', 12''; 116, 118, 120) are movable in the peripheral direction with respect to the tension band.

2. Device as claimed in claim 1, characterised in that the tension band comprises an annular leaf spring (20).

3. Device as claimed in claim 1 or 2, characterised in that the clamping members are constructed as tension rolls (12, 12', 12'') and are connected together by side-bars (14) into a tension roll chain (10), that the tension band (20) passes through U-shaped brackets (22) which are connected to the side-bars (14) of the tension roll chain (10) and that the tension band is rigidly connected to one of the brackets (2) and is slidingly guided in the other brackets.

4. Device as claimed in claim 3 in which the tensioning device includes a tithtening screw (28) and a nut-like threaded block (34) receiving the latter, characterised in that the tightening screw (28) is rotatably and axially fixedly mounted in a bearing block (30) associated with the one end roll (12'), that the threaded portion (28a) of the tightening screw engages in the threaded block (34) associated with the other end roll (12''), and that the bearing block (30) is radially movably guided in radial, groove-like slots (40) in the side walls of the annular enclosure (18).

5. Device as claimed in claim 1 or 2, characterised in that the clamping members are constructed as clamping blocks (116, 118, 120, 122), which are radially movably guided in guide groovers (126) in the annular enclosure (128).

6. Device as claimed in claim 5, characterised in that the annular enclosure 128) has an annular inner wall (128b) with perforations for the clamping blocks (116, 118, 120, 122).

7. Device as claimed in one of the preceding claims in which the annular enclosure (18, 18') in fixed to one of the two flanges (24), characterised in that the annular enclosure carries a part (46) of a centering device or is constructed as a part (18') of a centering device, which part cooperates with a second complementary portion (42, 42') of the centering device mounted on the other flange (26).

8. Devices claimed in claim 7, characterised in that the centering device includes guide bolts (46) which project from the annular enclosure (18) and a centering disc (42) connected to the other flange (26), which disc has holes for the guide bolts (46) (fig 2).

9. Device as claimed in claim 7, characterised in that the centering device includes a surface tapering towards the other flange on the external wall of the annular enclosure (18') and a centering disc (42') mounted on the other flange, which disc has an annular recess (44') with a surface complementary to the tapered surface (46') of the annular guide (18) (fig. 5) .

**Revendications**

1. Dispositif pour assembler deux brides (24, 26; 112, 114) en les pressant axialement l'une contre l'autre, comportant:

a) une bande de serrage (20; 132) annulaire résistante au frottement, entourant les brides radialement à l'extérieur;
b) un dispositif tendeur (28, 30; 136) destiné à serrer ou à écarter les extrémités de la bande de serrage (20; 132);

c) plusieurs organes de serrage (12, 12', 12''; 116, 118, 120, 122) placés à intervalles mutuels le long de la bande de serrage sur celle-ci et présentant chacun un creux dirigé vers l'intérieur, par les parois latérales biseautés duquel les brides sont serrées axialement l'une contre l'autre lorsqu'on resserre la bande de serrage;
d) une glissière (18; 128) coopérant avec les organes de serrage, qui guide radialement les éléments de serrage et les centre par rapport à l'axe de symétrie des brides, et qui fixe en direction périphérique en un endroit le groupe formé par les bandes de serrage et les organes de serrage (10; 116, 118, 120, 122, 132);

caractérisé par la combinaison des caractéristiques suivantes:

e) la glissière (18; 128) est un châssis annulaire ouvert radialement vers l'intérieur, qui entoure extérieurement le bloc formé par la bande de serrage et les organes de serrage (10; 16, 118, 120, 122, 132);
f) l'organe de serrage (12'; 122) placé à une extrémité de la bande de serrage (12', 122) est empêché de se déplacer en direction périphérique grâce à une glissière radiale (40, 126) du châssis (18; 128);
g) l'un des organes de serrage (12; 122) est rélié rigidement à la bande de serrage (20; 132), tandis que les autres organes de serrage (12, 12', 12''; 116, 118, 120) sont mobiles en direction périphérique par rapport à la bande de serrage.

2. Dispositif selon la revendication 1, caractérisé en ce que la bande de serrage est constituée par un ressort à lames annulaire (20).

3. Dispositif selon la revendication 1 ou 2, caractérisé en ce que les organes de serrage sont réalisés sous la forme de galets-tendeurs (12, 12', 12'') et sont reliés ensemble par des maillons (14), en une chaîne à galets-tendeurs (10), en ce que la bande de serrage (20) passe par des étriers en U (22) qui sont reliés aux maillons (14) de la chaîne de galets-tendeurs, et en ce que la bande de serrage est reliée rigidement à un étrier (22) et est guidée de façon à glisser dans les autres étriers.

4. Dispositif selon la revendication 3, dans lequel le dispositif tendeur comprend une vis de tension (28) et un bloc taraudé (34) du type écrou le recevant, caractérisé en ce que la vis de tension (28) est placée dans un bloc d'appui (30) rattaché à l'un des galets terminaux (12') de façon à pouvoir tourner et à être immobilisé axialement, en ce que la section filetée (28a) de la vis de tension pénètre dans le bloc taraudé (34) rattaché à l'autre rouleau terminal (12'') et en ce que le bloc d'appui (30) est guidé de façon à pouvoir se déplacer radialement dans des fentes radiales en forme de rainures (40) des parois latérales du châssis annulaire (18).

5. Dispositif selon la revendication 1 ou 2, caractérisé en ce que les organes de serrage sont réalisés sous la forme de blocs de serrage (116, 118, 120, 122) qui sont guidés de façon à pouvoir se déplacer radialement dans des rainures de guidage (127) du châssis annulaire (128).

6. Dispositif selon la revendication 5, caractérisé en ce que le châssis annulaire (128) comporte une paroi intérieure annulaire (128b) comportant des découpures (pour les blocs de serrage (116, 118, 120, 122)).

7. Dispositif selon l'une des revendications précédentes, dans lequel le châssis annulaire (18, 18') est fixé à l'une des deux brides (24), caractérisé en ce que le châssis annulaire supporte une partie (46) d'un dipositif de centrage ou est réalisé sous la forme d'une partie (18') d'un dispositif de centrage, partie qui coopère avec une seconde partie (42, 42') complémentaire d'un dispositif de centrage, placée sur l'autre bride (26).

8. Dispositif selon la revendication 7, caractérisé en ce que le dispositif de centrage comporte des broches de guidage (46) qui font saillie du châssis annulaire (18) et un disque de centrage (42) relié à l'autre bride (26).

9. Dispositif selon la revendication 7, caractérisé en ce que le dispositif de centrage comprend une autre surface (46') qui converge coniquement vers l'autre bride, à la paroi extérieure du châssis annulaire (18') et un disque de centrage (42') placé sur l'autre bride, qui comporte un creux annulaire (44') comportant une surface complémentaire de la surface conique (46') de la glissière annulaire (18').

0 043 593

Fig.1

Fig.2

Fig.5

Fig.3

Fig.4

9

Fig.6

Fig.7